# EUROPÄISCHE PATENTANMELDUNG

(11) **EP 4 432 449 A1**
(43) Veröffentlichungstag der Anmeldung: **18.09.2024**
(21) Anmeldenummer: 24158495.2
(22) Anmeldetag: 19.02.2024
(51) Int. Cl.: H01M 50/46, H01M 50/411, H01M 50/449, H01M 50/451, H01M 10/04, H01M 10/052, H01M 10/0585, H01M 50/103, H01M 10/056, H01M 4/04

(54) **VERFAHREN ZUR HERSTELLUNG EINER FESTKÖRPER-BATTERIEZELLE**

(30) Priorität: 16.03.2023 DE 102023202370
(71) Anmelder: VOLKSWAGEN AG, 38440 Wolfsburg (DE)
(72) Erfinder: Jansen, Tobias, 38106 Braunschweig (DE); Koch, Stephan Leonhard, 38154 Königslutter (DE); Kunze, Miriam, 30926 Seelze (DE)

(57) **Zusammenfassung**

Verfahren zur Herstellung einer Festkörper-Batteriezelle (1); wobei das Verfahren zumindest die folgenden Schritte aufweist:
a) Bereitstellen eines Ausgangsmaterials für ein Separatormaterial (2) in Form einer Lage (3); und
b) zumindest teilweise Beschichten der Lage (3) mit einem sublimierbaren Beschichtungsmaterial (4) und Ausbilden eines mit einer Beschichtung (5) beschichteten Separatormaterials (2).

## Beschreibung

Die Erfindung betrifft ein Verfahren zur Herstellung einer Festkörper-Batteriezelle. Das Verfahren betrifft insbesondere die Herstellung eines Separatormaterials, das dann in einer Festkörper-Batteriezelle eingesetzt wird.

Für den Antrieb von Kraftfahrzeugen werden vermehrt Batterien, insbesondere Lithium-Ionen-Batterien eingesetzt. Insbesondere weist z. B. ein Kraftfahrzeug eine elektrische Maschine zum Antrieb des Kraftfahrzeuges auf, wobei die elektrische Maschine durch die in der Batteriezelle gespeicherte elektrische Energie antreibbar ist. Batterien werden üblicherweise aus Batteriezellen zusammengesetzt, wobei jede Batteriezelle einen Stapel von Anoden-, Kathoden- und Separator-Blättern aufweist. Zumindest ein Teil der Anoden- und Kathodenblätter sind als Stromableiter ausgeführt, zur Ableitung des von der Zelle bereitgestellten Stroms hin zu einem außerhalb der Zelle angeordneten Verbraucher. Es sind Batteriezellen mit flüssigen oder festen Elektrolyten (Festkörper-Batterie) bekannt.

Eine Festkörper-Batteriezelle umfasst insbesondere ein gasdicht ausgeführtes Gehäuse und darin angeordnet mindestens einen Stapel aufeinander angeordneter Elektroden bzw. Lagen. Das Gehäuse kann als formfestes Gehäuse (prismatische Zelle) oder zumindest teilweise aus einem elastisch verformbaren Folienmaterial (Pouchzelle) ausgeführt sein. Auch eine Kombination beider Gehäusearten ist möglich.

Das Separatormaterial wird in einer ass-Batteriezelle (all-solid-state-Batteriezelle bzw. Festkörper-Batteriezelle) eingesetzt, die also ausschließlich feste Komponenten umfasst (semisolid Elektrolyte eingeschlossen, z. B. Polymere), also auch einen festen Elektrolyten. Diese festen Elektrolyten werden als ionenleitende Separatormaterialien zwischen den Elektroden (Anode, Kathode) angeordnet. Diese Separatormaterialien bestehen regelmäßig aus keramischen Werkstoffen oder aus Polymer, Glas bzw. Hybridmaterialien.

Separatoren aus ionenleitenden Festkörperelektrolyten weisen eine deutliche Instabilität insbesondere gegenüber Luftfeuchtigkeit und Luftsauerstoff auf. Weiterhin dampft im Rahmen des Sinterprozesses bzw. der Herstellung z. B. des ionenleitenden Festkörperelektrolyten ein deutlicher Teil der Ionen bzw. des Lithiums aus dem Material ab. Beides, Lithium-Abdampfen und die Reaktion mit Luftbestandteilen, verringern die Ionen- bzw. Lithium-Leitfähigkeit und damit die Performanz des Separatormaterials bzw. der Separatormembran für Festkörper-Batteriezellen.

Weiterhin ist es regelmäßig beabsichtigt, dass sich in der Festkörper-Batteriezelle die Lithium-Anode insitu im ersten Ladezyklus der Batteriezelle (also während der Formierung) ausbildet. Hierfür ist es insbesondere notwendig, dass bestimmte Merkmale an der Oberfläche des Separatormaterials vorhanden sind, damit die dafür erforderliche Abscheidung funktioniert.

Ein Kontakt des Separatormaterials mit Luftfeuchtigkeit bzw. Luftsauerstoff wird bisher durch den Einsatz einer Schutzgasatmosphäre unterbunden. Die Bereitstellung und Aufrechterhaltung einer solchen Schutzgasatmosphäre ist jedoch sehr aufwändig.

Aus der GB 1 189 222 A1 ist ein Verfahren zur Herstellung einer Elektrode für eine Batteriezelle bekannt. Dabei wird ein Elektrolytfestkörper hergestellt und mit einem Elektrodenmaterial beschichtet.

Aus der WO 2004/067259 A1 ist ein Herstellungsverfahren für Brennstoffzellen bekannt.

Aufgabe der vorliegenden Erfindung ist es, die mit Bezug auf den Stand der Technik angeführten Probleme zumindest teilweise zu lösen. Insbesondere soll ein Verfahren vorgeschlagen werden, durch das die Herstellung einer Festkörper-Batteriezelle zu geringeren Kosten möglich ist.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Herstellung einer Festkörper-Batteriezelle vorgeschlagen. Das Verfahren weist zumindest die folgenden Schritte auf:
a) Bereitstellen eines Ausgangsmaterials für ein Separatormaterial in Form einer Lage; und
b) zumindest teilweise Beschichten der Lage mit einem sublimierbaren Beschichtungsmaterial und Ausbilden eines mit einer Beschichtung beschichteten Separatormaterials.

Die obige (nicht abschließende) Einteilung der Verfahrensschritte in a) und b) soll vorrangig nur zur Unterscheidung dienen und keine Reihenfolge und/oder Abhängigkeit erzwingen. Auch die Häufigkeit der Verfahrensschritte kann variieren. Ebenso ist möglich, dass Verfahrensschritte einander zumindest teilweise zeitlich überlagern. Bevorzugt werden die Schritte a) und b) in der angegebenen Reihenfolge durchgeführt.

Das in den Schritten a) und b) hergestellte beschichtete Separatormaterial ist insbesondere für den Einsatz in einer Lithium-lonen-Batteriezelle oder einer Lithium-Metall Batteriezelle, ggf. auch für Natrium oder Aluminium-Batteriezellen vorgesehen.

Das Separatormaterial wird in einer ass-Batteriezelle (all-solid-state-Batteriezelle bzw. Festkörper-Batteriezelle) eingesetzt, die also ausschließlich feste Komponenten umfasst (semisolid Elektrolyte eingeschlossen, z. B. Polymere), also auch einen festen Elektrolyten. Diese festen Elektrolyten werden als ionenleitende Separatormaterialien zwischen den Elektroden angeordnet und/ oder sind als Elektrolyt bereits in dem Aktivmaterial enthalten bzw. mit diesem vermischt. Diese Separatormaterialien bestehen regelmäßig aus keramischen Werkstoffen oder aus Polymer, Glas bzw. Hybridmaterialien.

Insbesondere ist zwischen den Schritten a) und b) ein weiterer Schritt a1) vorgesehen, bei dem die Lage nach Schritt a) gesintert wird. Dieser Prozessschritt ist insbesondere bei keramischen Separatormaterialien vorgesehen. Nach dem Schritt a1) schließt sich dann insbesondere Schritt b) an.

Insbesondere umfasst das Lithium-ionenleitende Ausgangsmaterial für den Einsatz als Separatormaterial (oder als Elektrolyt in der Anodenschicht oder Kathodenschicht) zumindest eines der folgenden Materialien aus der Materialklasse der Sulfide, Oxide, Nitride, Halide, Hydride oder Polymere. Hierzu seien beispielweise folgende genannt: Thio-LiSICon-artige Materialien (Li₂S-P₂S₅, Li₂S-SiS₂, Li₂S-GeS₂), Argyrodite (Li₆PS₅X (mit X = CI, Br oder I), Li₇PS₆, Li₇PSe₆), Granate (Li₇La₃Zr₂O₁₂ (LLZO)), Perovskite (Li₃ₓLa_{2/3-3x}TiO₃ (LLTO)); NaSICon-artige Materialien (Li₁₋ₓAlₓTi₂₋ₓ(PO₄)₃, Li_{1.5}Al_{0.5}Ge_{1.5}(PO₄)₃,), Halide (Li2CdCl4), Nitride (Li3N, Li2PN4), Hydride (Li₂NH, LiBH₄), Polymere, (PEO-LiTFSI, Phophazene-LiTFSI, PEO-LiFSI). Insbesondere sind auch Kombination der genannten Materialien möglich.

Die Elektrode umfasst insbesondere ein Trägermaterial, z. B. eine Kupfer- oder Aluminiumfolie. Das verwendete Trägermaterial besteht insbesondere aus 3 bis 15 µm dickem Kupfer für die Anode und 3 bis 15 µm [Mikrometer] dickem Aluminium für die Kathode. Das Trägermaterial ist zumindest auf einer größten Seitenfläche, ggf. auch auf den einander gegenüberliegenden größten Seitenflächen zumindest teilweise mit einem Aktivmaterial beschichtet. Das Trägermaterial ist als Endlosmaterial ausgeführt.

Im Rahmen des Schrittes a) erfolgt insbesondere ein Bereitstellen eines Ausgangsmaterials für ein Separatormaterial in Form einer Lage. Die Lage ist z. B. ein folienartiger oder flächiger Körper, der insbesondere quaderförmig, aber mit geringer Materialstärke, ausgebildet ist. Dabei weist der Körper zwei gegenüberliegend angeordnete größte Seitenflächen und deutlich kleinere weitere Seitenflächen bzw. Ränder der Lage auf.

Im Rahmen des Schrittes b) erfolgt insbesondere ein zumindest teilweises (oder vollständiges) Beschichten der Lage mit einem sublimierbaren Beschichtungsmaterial und ein Ausbilden eines mit einer Beschichtung beschichteten Separatormaterials. Sublimierbar heißt insbesondere, dass das Beschichtungsmaterial nach dem Aufbringen auf das Separatormaterial aus dem festen Zustand direkt in den gasförmigen Zustand übergeht.

Dieser Übergang soll insbesondere bei Umgebungsbedingungen stattfinden, die für die weiteren Komponenten der Batteriezelle nicht schädlich sind.

Die Beschichtung kann durch verschiedenartige Beschichtungsverfahren aufgetragen werden, z. B. durch Sprühen, Eintauchen, Laminieren, etc.

Insbesondere ist die Lage ein flächiger Körper, dessen zwei größten, einander gegenüberliegenden Seitenflächen in Schritt b) vollständig beschichtet werden. Insbesondere werden alle Seitenflächen, wird also der gesamte Körper vollumfänglich beschichtet.

Insbesondere ist die Beschichtung zumindest für H₂O und/ oder CO₂ undurchlässig. Undurchlässig heißt, dass ein Kontakt zwischen dem Separatormaterial und den genannten Molekülen durch die Beschichtung verhindert wird bzw. durch das Beschichtungsmaterial hindurch unmöglich ist.

Insbesondere umfasst das Beschichtungsmaterial zumindest teilweise Campher (C₁₀H₁₆O), auch als Bornan-2-on oder 1,7,7-Trimethyl-bicyclo[2.2.1]heptan-2-on bezeichnet, oder ist bevorzugt vollständig daraus ausgebildet.

Campher sublimiert bereits bei Raumtemperatur und ist als Beschichtung zumindest für H₂O und/ oder CO₂ undurchlässig.

Es sind jedoch auch andere Beschichtungsmaterialien einsetzbar, die vergleichbare Eigenschaften aufweisen.

Insbesondere wird das Beschichtungsmaterial in einem, insbesondere auf Schritt b) nachfolgenden, Schritt c) bei einer Temperatur von höchstens 120 Grad Celsius, bevorzugt von höchstens 100 Grad Celsius, und bei einem Druck von weniger als 250 Millibar, insbesondere bei einem Druck von weniger als 150 Millibar, bevorzugt bei einem Druck von höchstens 100 Millibar, sublimiert und zumindest teilweise (oder vollständig) von dem Separatormaterial entfernt.

Insbesondere wird das Beschichtungsmaterial in Schritt c), bevorzugt mit den genannten Prozessparametern, vollständig von dem Separatormaterial entfernt.

Insbesondere wird das sublimierte Beschichtungsmaterial nach Schritt c) aufgefangen und recycliert. Insbesondere kann das Beschichtungsmaterial nahezu unbegrenzt wiederverwendet werden, bevorzugt auch für das beschriebene Verfahren.

Insbesondere wird das beschichtete Separatormaterial zwischen den Schritten b) und Schritt c) zumindest zwischen zwei Elektrodenmaterialen angeordnet. Infolge der möglichen Sublimation des Beschichtungsmaterials kann das Entfernen des Beschichtungsmaterials auch nach einem Stapeln der Komponenten einer Batteriezelle erfolgen. Dabei kann das Beschichtungsmaterial z. B. entlang der Oberflächen der aufeinander liegenden Komponenten aus dem Stapel entweichen und abgeführt werden. Eine Kontaktierung des Separatormaterials mit H₂O und/ oder CO₂ ist zu diesem Zeitpunkt insbesondere durch die Kontaktierung der vorher beschichteten Oberflächen mit den weiteren Komponenten (z. B. Elektroden) des Stapels verhindert.

Insbesondere können die zu einem Stapel angeordneten Elektrodenmaterialien und das beschichtete Separatormaterial zwischen den Schritten b) und Schritt c) in einem Gehäuse der Batteriezelle angeordnet werden. Das sublimierte Beschichtungsmaterial kann dann insbesondere über eine Öffnung des Gehäuses entfernt werden.

Insbesondere wird das Gehäuse nach Schritt c) verschlossen.

Mit dem vorgeschlagenen Verfahren können insbesondere die Kosten für eine Herstellung einer Batteriezelle verringert werden, weil keine separate Inertgasatmosphäre notwendig ist. Zudem wird die Lagerfähigkeit des Separatormaterials verbessert bzw. dessen Alterung verlangsamt.

Es wird weiter eine Festkörper-Batteriezelle vorgeschlagen, zumindest umfassend ein Gehäuse der Batteriezellen und darin angeordnet mindestens zwei Elektroden (eine Anode und eine Kathode) sowie mindestens eine Lage des Separatormaterials, das durch das beschriebene Verfahren hergestellt wurde.

Die Festkörper-Batteriezelle ist insbesondere eine Pouchzelle (mit einem verformbaren Batteriezellengehäuse bestehend aus einer Pouchfolie) oder eine prismatische Zelle (mit einem formfesten Batteriezellengehäuse). Eine Pouchfolie ist ein bekanntes verformbares Gehäuseteil, dass als Batteriezellengehäuse für sogenannte Pouchzellen eingesetzt wird. Es handelt sich dabei um ein Kompositmaterial, z. B. umfassend einen Kunststoff und Aluminium.

Die Festkörper-Batteriezelle ist insbesondere eine Lithium-lonen-Batteriezelle oder eine Lithium-Metall Batteriezelle.

Eine Festkörper-Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges (einen Traktionsantrieb) auf, wobei die elektrische Maschine durch die in der Festkörper-Batteriezelle gespeicherte elektrische Energie antreibbar ist.

Es wird weiter ein Kraftfahrzeug vorgeschlagen, zumindest umfassend einen Traktionsantrieb und eine Batterie mit mindestens einer der beschriebenen Festkörper-Batteriezellen, wobei der Traktionsantrieb durch die mindestens eine Festkörper-Batteriezelle mit Energie versorgbar ist.

Insbesondere ist zumindest ein System zur Datenverarbeitung vorgesehen, das Mittel aufweist, die zur Durchführung des Verfahrens bzw. zur Steuerung einer das Verfahren ausführenden Vorrichtung geeignet ausgestattet, konfiguriert oder programmiert sind bzw. die das Verfahren ausführen.

Die Mittel umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen ermöglichen.

Es wird weiter ein Computerprogramm vorgeschlagen, umfassend Befehle, die bei der Ausführung des Programms durch einen Computer diesen veranlassen, das beschriebene Verfahren bzw. die Schritte des beschriebenen Verfahrens auszuführen.

Es wird weiter ein computerlesbares Speichermedium vorgeschlagen, umfassend Befehle, die bei der Ausführung durch einen Computer diesen veranlassen, das beschriebene Verfahren bzw. die Schritte des beschriebenen Verfahrens auszuführen.

Die Ausführungen zu dem Verfahren sind auf die Festkörper-Batteriezelle, das Kraftfahrzeug, das System zur Datenverarbeitung und/oder das computerimplementierte Verfahren (also das Computerprogramm und das computerlesbare Speichermedium) übertragbar und umgekehrt.

Die Verwendung unbestimmter Artikel ("ein", "eine", "einer" und "eines"), insbesondere in den

Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Ablauf des Verfahrens;
- Fig. 2:: eine Lage des Separatormaterials in einer perspektivischen Ansicht;
- Fig. 3:: einen Stapel von Elektroden und Separatormaterial in einem Gehäuse einer Batteriezelle in einer Seitenansicht im Schnitt; und
- Fig. 4:: eine Batteriezelle.

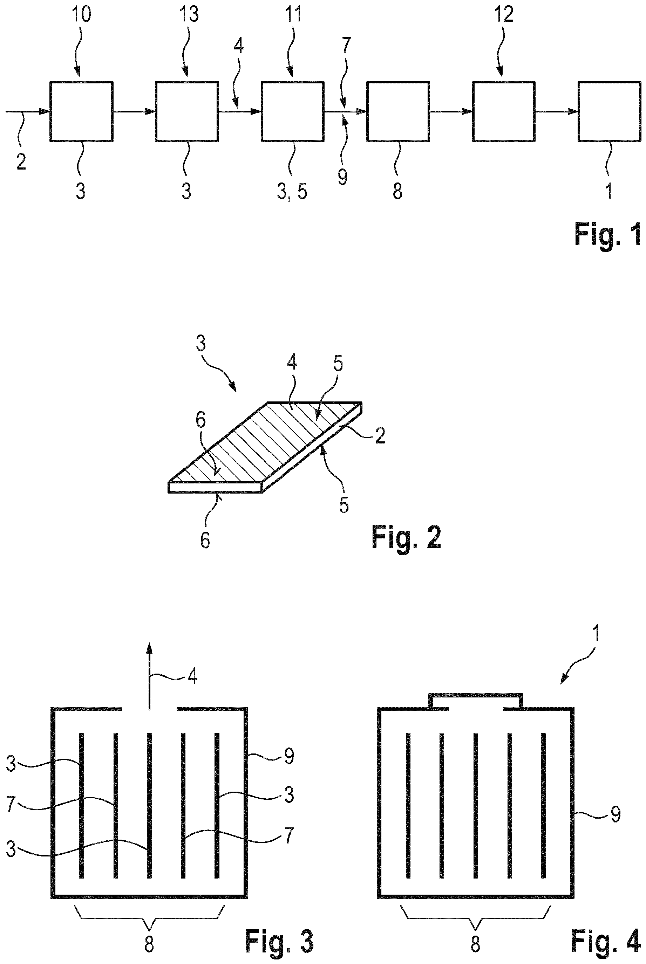

Fig. 1 zeigt einen Ablauf des Verfahrens. Im Rahmen des Schrittes a) 10 erfolgt ein Bereitstellen eines Ausgangsmaterials für ein Separatormaterial 2 in Form einer Lage 3. Die Lage 3 ist ein folienartiger oder flächiger Körper, der quaderförmig, aber mit geringer Materialstärke, ausgebildet ist (siehe Fig. 2). Dabei weist der Körper zwei gegenüberliegend angeordnete größte Seitenflächen 6 und deutlich kleinere weitere Seitenflächen bzw. Ränder der Lage 3 auf.

In einem Schritt a1) 13 erfolgt ein Sintern der Lage 3. Nach dem Schritt a1) 13 schließt sich dann Schritt b) 11 an. Im Rahmen des Schrittes b) 11 erfolgt ein vollständiges Beschichten der Lage 3 mit einem sublimierbaren Beschichtungsmaterial 4 und ein Ausbilden eines mit einer Beschichtung 5 beschichtetes Separatormaterial 4.

Das beschichtete Separatormaterial 4 wird nach Schritt b) 11 und vor Schritt c) 12 zwischen zwei Elektrodenmaterialen 7 (eine Anode und eine Kathode) angeordnet. Die zu einem Stapel 8 angeordneten Elektrodenmaterialien 7 und das beschichtete Separatormaterial 4 werden in einem Gehäuse 9 der Batteriezelle 1 angeordnet.

Infolge der möglichen Sublimation des Beschichtungsmaterials 4 kann das Entfernen des Beschichtungsmaterials 4 auch nach einem Stapeln der Komponenten 4, 7 einer Batteriezelle 1 erfolgen. Dabei kann das Beschichtungsmaterial 4 z. B. entlang der Oberflächen der aufeinander liegenden Komponenten 4, 7 aus dem Stapel 8 entweichen und abgeführt werden. Eine Kontaktierung des Separatormaterials 2 mit H₂O und/ oder CO₂ ist zu diesem Zeitpunkt durch die Kontaktierung der vorher beschichteten Oberflächen des Separatormaterials 4 mit den weiteren Komponenten (z. B. Elektroden 7) des Stapels 8 verhindert.

Das Beschichtungsmaterial 4 wird in einem auf Schritt b) 11 nachfolgenden Schritt c) 12 bei einer Temperatur von höchstens 120 Grad Celsius und bei einem Druck von weniger als 250 Millibar sublimiert und vollständig von dem Separatormaterial 4 entfernt. Das sublimierte Beschichtungsmaterial 4 kann über eine Öffnung des Gehäuses 9 entfernt werden. Das Gehäuse 9 kann nach Schritt c) 12 verschlossen werden, so dass eine einsatzbereite Batteriezelle 1 gebildet ist.

Fig. 2 zeigt eine Lage 3 des Separatormaterials 2 in einer perspektivischen Ansicht. Die Lage 3 ist ein folienartiger oder flächiger Körper, der quaderförmig, aber mit geringer Materialstärke, ausgebildet ist. Dabei weist der Körper zwei gegenüberliegend angeordnete größte Seitenflächen 6 und deutlich kleinere weitere Seitenflächen bzw. Ränder der Lage 3 auf. Zumindest die größten Seitenflächen 6 weisen die Beschichtung 5 auf.

Fig. 3 zeigt einen Stapel 8 von Elektroden (-material 7) und Separatormaterial 2 in einem Gehäuse 9 einer Batteriezelle 1 in einer Seitenansicht im Schnitt. Das beschichtete Separatormaterial 4 wird nach Schritt b) 11 und vor Schritt c) 12 zwischen zwei Elektrodenmaterialen 7 (eine Anode und eine Kathode) angeordnet. Die zu einem Stapel 8 angeordneten Elektrodenmaterialien 7 und das beschichtete Separatormaterial 4 werden in einem Gehäuse 9 der Batteriezelle 1 angeordnet. Das Beschichtungsmaterial 4 wird in einem auf Schritt b) 11 nachfolgenden Schritt c) 12 bei einer Temperatur von höchstens 120 Grad Celsius und bei einem Druck von weniger als 250 Millibar sublimiert und vollständig von dem Separatormaterial 4 entfernt. Das sublimierte Beschichtungsmaterial 4 kann über eine Öffnung des Gehäuses 9 entfernt werden (siehe Pfeil).

Fig. 4 zeigt eine Batteriezelle 1 mit dem verschlossenem Gehäuse 9 und dem darin angeordneten Stapel 8.

### Bezugszeichenliste

- 1: Batteriezelle
- 2: Separatormaterial
- 3: Lage
- 4: Beschichtungsmaterial
- 5: Beschichtung
- 6: Seitenfläche
- 7: Elektrodenmaterial
- 8: Stapel
- 9: Gehäuse
- 10: Schritt a) des Verfahrens
- 11: Schritt b) des Verfahrens
- 12: Schritt c) des Verfahrens
- 13: Schritt a1) des Verfahrens

## Patentansprüche

1. Verfahren zur Herstellung einer Festkörper-Batteriezelle (1); wobei das Verfahren zumindest die folgenden Schritte aufweist:
a) Bereitstellen eines Ausgangsmaterials für ein Separatormaterial (2) in Form einer Lage (3); und
b) zumindest teilweise Beschichten der Lage (3) mit einem sublimierbaren Beschichtungsmaterial (4) und Ausbilden eines mit einer Beschichtung (5) beschichteten Separatormaterials (2).

2. Verfahren nach Patentanspruch 1, wobei die Lage (3) ein flächiger Körper ist, dessen zwei größten, einander gegenüberliegenden Seitenflächen (6) in Schritt b) (11) vollständig beschichtet werden.

3. Verfahren nach einem der vorhergehenden Patentansprüche, wobei die in Schritt b) (11) erzeugte Beschichtung (5) zumindest für H₂O oder CO₂ undurchlässig ist.

4. Verfahren nach einem der vorhergehenden Patentansprüche, wobei das Beschichtungsmaterial (4) Campher (C₁₀H₁₆O) umfasst.

5. Verfahren nach einem der vorhergehenden Patentansprüche, wobei das Beschichtungsmaterial (4) in einem nachfolgenden Schritt c) (12) bei einer Temperatur von höchstens 120 Grad Celsius und bei einem Druck von weniger als 250 Millibar sublimiert und zumindest teilweise von dem Separatormaterial (2) entfernt wird.

6. Verfahren nach Patentanspruch 5, wobei das Beschichtungsmaterial (4) in Schritt c) (12) vollständig von der Lage (3) entfernt wird.

7. Verfahren nach einem der vorhergehenden Patentansprüche 5 und 6, wobei das sublimierte Beschichtungsmaterial (4) nach Schritt c) (12) aufgefangen und recycelt wird.

8. Verfahren nach einem der vorhergehenden Patentansprüche 5 bis 7, wobei das beschichtete Separatormaterial (2) zwischen den Schritten b) (11) und Schritt c) (12) zumindest zwischen zwei Elektrodenmaterialen (7) angeordnet wird.

9. Verfahren nach Patentanspruch 8, wobei die zu einem Stapel (8) angeordneten Elektrodenmaterialien (7) und das beschichtete Separatormaterial (2) zwischen den Schritten b) (11) und Schritt c) (12) in einem Gehäuse (9) der Batteriezelle (1) angeordnet werden.

10. Verfahren nach Patentanspruch 9, wobei das Gehäuse (9) nach Schritt c) (12) verschlossen wird.
